# EUROPEAN PATENT SPECIFICATION

(11) **EP 3 860 281 B1**
(45) Date of publication and mention of the grant of the patent: **03.12.2025**
(21) Application number: 18934584.6
(22) Date of filing: 28.09.2018
(51) Int. Cl.: H04W 72/12, H04W 72/04

(54) **TRANSMISSION DEVICE AND RECEPTION DEVICE**
SENDEVORRICHTUNG UND EMPFANGSVORRICHTUNG
DISPOSITIF DE TRANSMISSION ET DISPOSITIF DE RÉCEPTION

(43) Date of publication of application: 04.08.2021
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/036591
(87) International publication number: WO 2020/066022

(56) References cited:
- EP-A1- 3 827 540
- INTEL CORPORATION: "Views on evaluation methodology and Layer 1 enhancements for Rel-16 eURLLC", vol. RAN WG1, no. Gothenburg, Sweden; 20180820 - 20180824, 11 August 2018 (2018-08-11), XP051516080, Retrieved from the Internet <URL:http://www.3gpp.org/ftp/tsg%5Fran/WG1%5FRL1/TSGR1%5F94/Docs/R1%2D1808705%2Ezip> [retrieved on 20180811]
- NTT DOCOMO ET AL: "UL data transmission procedure for June Release URLLC", vol. RAN WG1, no. Busan, Korea; 20180521 - 20180525, 20 May 2018 (2018-05-20), XP051442267, Retrieved from the Internet <URL:http://www.3gpp.org/ftp/Meetings%5F3GPP%5FSYNC/RAN1/Docs/> [retrieved on 20180520]
- NTT DOCOMO ET AL: "Enhanced UL transmission with configured grant for URLLC", vol. RAN WG1, no. Gothenburg, Sweden; 20180820 - 20180824, 11 August 2018 (2018-08-11), XP051516535, Retrieved from the Internet <URL:http://www.3gpp.org/ftp/tsg%5Fran/WG1%5FRL1/TSGR1%5F94/Docs/R1%2D1809165%2Ezip> [retrieved on 20180811]
- NTT: "Physical Layer Enhancements for NR URLLC", 3GPP TSG RAN WG1 #94 RL-1809163, 24 August 2018 (2018-08-24), pages 1 - 15, XP051516533
- HUAWEI ET AL.: "Enhanced UL configured grant transmissions", 3GPP TSG RAN WG1 #94 RL-1808100, 24 August 2018 (2018-08-24), pages 1 - 6, XP051515502
- ZTE: "Enhanced UL grant-free transmissions", 3GPP TSG RAN WG1 #94 RL-1808213, 24 August 2018 (2018-08-24), pages 1 - 6, XP051515598
- NTT: "Layer 1 enhancements for NR URLLC", 3GPP TSG RAN WG1 #94BIS R1-1811378, 12 October 2018 (2018-10-12), pages 1 - 18, XP051518782

## Description

### Technical Field

The present disclosure relates to a transmitting apparatus and a receiving apparatus in a next-generation mobile communication system.

### Background Art

In the universal mobile telecommunications system (UMTS) network, long term evolution (LTE) has been specified for the purpose of further increasing a data rate, providing low latency, and the like (see Non-Patent Literature 1). In addition, LTE-Advanced (3rd generation partnership project (3GPP) Rel. (Release) 10-14) has been specified for the purpose of further increasing capacity and sophistication of LTE (3GPP Rel. 8 and 9).

Successor systems to LTE (for example, also referred to as 5th generation mobile communication system (5G), 5G+ (plus), new radio (NR), or 3GPP Rel. 15 or later) are also being studied.

In the existing LTE system (for example, 3GPP) Rel. 8-14), a user terminal (user equipment (UE)) receives a downlink shared channel (for example, a physical downlink shared channel (PDSCH)) scheduled by downlink control information (for example, downlink control information (DCI)). Also, the UE transmits uplink control information (UCI) by using at least one of an uplink (UL) data channel (for example, a physical uplink shared channel (PUSCH) and a UL control channel (for example, a physical uplink control channel (PUCCH)).

In the 3GPP standard contribution entitled "Views on evaluation methodology and Layer 1 enhancements for Rel-16 eURLLC" (R1-1808705), the authors disclose evaluation methodologies, as well as the Layer 1 enhancements for Rel-16 eURLLC, and propose URLLC UMa and InH scenarios defined in TR 38.802/38.913 are taken as a starting point for defining a new evaluation methodology for eURLLC with at least the following necessary updates: use NR channel model defined in TR 38.901 instead of TR 36.873; change UE indoor-outdoor mix ratio to 80% outdoor, 20% indoor; consider 100% low-loss buildings for the penetration loss modelling; and add FR2 related parameters for the InH scenario.

EP 3 827 540 A1, cited under Article 54(3) EPC, discloses an uplink transmission method, and a corresponding user equipment, base station and computer readable medium. A method for an uplink data transmission includes: determining a transmission occasion for an uplink transmission and a Hybrid Automatic Repeat Request, HARQ, process ID corresponding to the transmission occasion; determining an antenna port according to a correspondence between antenna ports and HARQ process IDs and/or a correspondence between antenna ports and transmission occasions; and transmitting, by the antenna port, uplink data corresponding to the HARQ process ID and a pilot signal corresponding to the uplink data. By establishing the correspondence between the antenna ports and the HARQ process IDs or the transmission occasion, the base station determines the antenna port when detecting the uplink transmission, so that the HARQ process ID corresponding to the uplink transmission may be determined.

In the 3GPP standard contribution entitled "UL data transmission procedure for June Release URLLC" (R1-1807069), the authors disclose UL data transmission procedure including indication of repetition factor K, repetition construction for data mapping type B, frequency hopping for PUSCH repetitions within one slot and collision handling between eMBB and June drop URLLC.

### Citation List

### Non-Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future wireless communication systems (for example, new radio (NR)), a study is underway to control data scheduling in units of given duration (for example, slot). Alternatively, controlling data scheduling in units of one or more symbols included in a slot (for example, also called a mini slot or a sub slot) is also under study.

In addition, for NR, performing repetition transmission (repetition) in UL transmission and downlink (DL) transmission is also under study. For example, it is assumed that repetition is performed over a plurality of slots. Further, performing repetition (mini slot repetition) in a given symbol unit (for example, a mini slot unit) in a slot is also under study.

In this case, it is possible that repetition in a given symbol unit is applied over a plurality of slots, but how to control the repetition of each data (for example, allocation of time resources used for transmission) has not been sufficiently studied. When the repetition fails to be appropriately performed, communication throughput or communication quality may be deteriorated.

In view of this, one object of the present disclosure is to provide a transmitting apparatus and a receiving apparatus that can appropriately perform repetition.

### Solution to Problem

The present invention provides a terminal, in accordance with claim 1.

The present invention also provides a radio communication method for a terminal, in accordance with claim 4.

The present invention also provides a base station, in accordance with claim 5.

The present invention also provides a system, in accordance with claim 6.

### Advantageous Effects of Invention

According to an aspect of the present disclosure, repetition can be appropriately performed.

### Brief Description of Drawings

Fig. 1 is a diagram illustrating an example of repetition.
Fig. 2 is a table illustrating examples of repetition patterns in a slot.
Figs. 3A to 3C are diagrams illustrating examples of a demodulation reference signal (DMRS) allocation in repetition.
Fig. 4 is a diagram illustrating an example of a schematic configuration of a radio communication system according to one embodiment.
Fig. 5 is a diagram illustrating an example of a configuration of a base station according to one embodiment.
Fig. 6 is a diagram illustrating an example of a configuration of a user terminal according to one embodiment.
Fig. 7 is a diagram illustrating an exemplary hardware configuration of a base station and a user terminal according to one embodiment.

### Description of Embodiments

Application of repetition to data transmission in NR has been under study. For example, a base station (network (NW), gNB) repeatedly transmits DL data (for example, downlink shared channel (PDSCH)) for a given number of times. Alternatively, a UE repeatedly transmits UL data (for example, uplink shared channel (PUSCH)) for a given number of times.

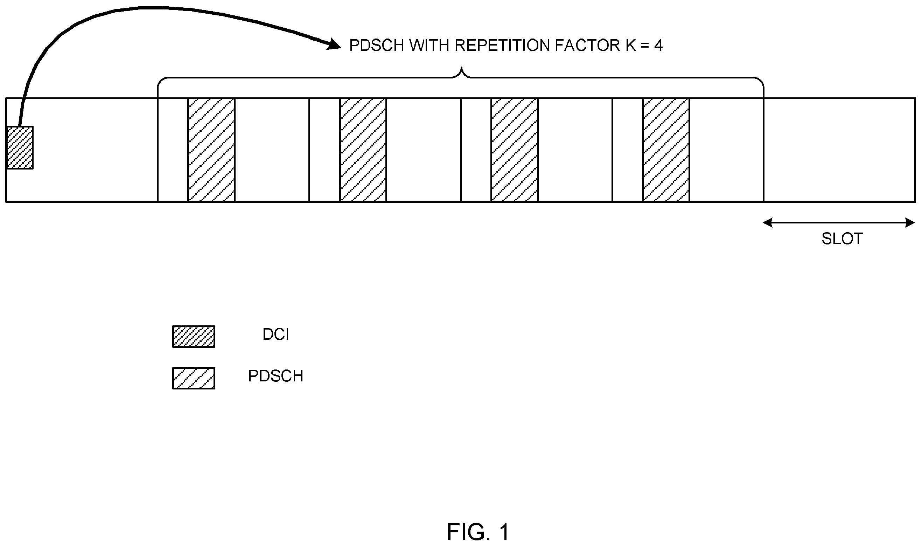

Fig. 1 is a diagram illustrating an example of repetition of PDSCH. Fig. 1 illustrates an example in which a given number of PDSCH repetitions are scheduled by a single piece of DCI. The number of repetitions is also referred to as a repetition factor K or an aggregation factor K.

In Fig. 1, the repetition factor K = 4, but the value of K is not limited to this. Also, an n-th repetition is also referred to as an n-th transmission occasion or the like and may be identified by a repetition index k (0 ≤ k ≤ K - 1). Although Fig. 1 illustrates repetition of PDSCH, the following description can also be applied to repetition of dynamic grant-based PUSCH scheduled by DCI or configuration grant-based PUSCH not scheduled by DCI.

For example, in Fig. 1, the UE receives information indicating the repetition factor K (for example, aggregationFactorUL or aggregationFactorDL) by higher layer signaling. Here, the higher layer signaling may be, for example, any of radio resource control (RRC) signaling, medium access control (MAC) signaling, broadcast information and so on, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

The UE detects the DCI that schedules PDSCH that is repeatedly transmitted in a certain serving cell or a partial band (bandwidth part (BWP)) within the certain serving cell. The BWP may include an uplink (UL) BWP (UL BWP, uplink BWP) and a downlink (DL) BWP (DL BWP, downlink BWP).

The user terminal may monitor a control resource set (CORESET) configured in the DL BWP (one or more sets of search spaces (SS sets) associated with the CORESET or PDCCH candidates forming the SS set) so as to detect the DCI. The user terminal receives the PDSCH in K consecutive slots after a given period(or duration) from the slot in which the DCI is detected. Note that the serving cell is also called a carrier, a component carrier (CC), a cell, or the like.

Specifically, the user terminal controls PDSCH receiving processing (for example, at least one of receiving, demapping, demodulation, or decoding) or a PUSCH transmitting processing (for example, at least one of transmitting, mapping, modulation, or code) in the K consecutive slots on the basis of at least one of the following field values (or information indicated by the field value) in the above DCI:
- the allocation of time domain resource (such as the start symbol and the number of symbols in each slot, for example),
- the allocation of frequency domain resource (for example, a predetermined number of resource blocks (RBs) or a predetermined number of resource block groups (RBGs)),
- the modulation and coding scheme (MCS) index,
- the configuration of the demodulation reference signal (DMRS) of the PDSCH, or
- the state (TCI-state) of the transmission configuration indication or transmission configuration indicator (TCI).

On the other hand, in NR, in addition to repetition in slot units, it is also assumed that data is repeatedly transmitted in units of a given number of symbols (for example, in mini slot units or sub slot units). When repetition is performed in units of given symbols, one of a plurality of repetitions (data allocation) may cross a slot boundary depending on the number of repetitions (for example, K) and the data allocation unit (data length of each repetition).

Since slots are used as the basic unit of transmission, if a repetition of data in units of a given number of symbols crosses (or exceeds, straddles, crosses, or travels across) a slot boundary, collision may occur with other signals and/or channels, and control of transmission power may become complicated. As a result, communication throughput and/or communication quality may be deteriorated.

The present inventors pay attention to the data length repetitively transmitted and the number of repetitions when the repetition is applied in units of a given number of symbols, and have come up with the idea of controlling the period of each repetition so that the repetition does not cross the slot boundary.

Hereinafter, embodiments according to the present disclosure will be described in detail with reference to the drawings. The radio communication method according to each of the embodiments may be applied independently, or may be applied in combination with others.

Further, in the following description, a case where a pattern for repetition (for example, a transmission time interval (TTI) pattern) is arranged in one slot so that the repetition does not exceed the slot boundary will be given as an example, but the present embodiment is not limited to this. Repetition may be arranged in a given slot (for example, M slot). M may be determined according to a subcarrier interval and the like. Further, even when the pattern for repetition is arranged in an M slot, the pattern may be controlled so that one repetition is not arranged over (or straddles) different slots.

Further, in the following description, repetition of a physical shared channel (PDCCH or PUSCH) will be described as an example of the repetition, but the repetition may be applied to repetition of another signal or channel.

### (First Aspect)

In a first aspect, a period(or duration) of each repetition is configured based on at least one of a length (L) of data to be repeatedly transmitted (for example, PDCCH or PUSCH) and a repetition factor (K) so that the repetition does not cross a slot boundary.

When applying the repetition to a PUSCH, a UE determines the period of repetition of the PUSCH based on the PUSCH length (for example, symbol length) configured or provided in notification by a base station, and a repetition factor, so that the repetition does not cross a slot boundary.

The repetition of a PUSCH may include repetitions for which different periods(or duration) have been configured. For example, the repetition of a PUSCH may include a first repetition transmitted in a first period(or first duration) and a second repetition transmitted in a second period(or second duration) that is shorter than the first period.

The base station may control the reception of a PUSCH based on a given repetition pattern determined by the UE based on the PUSCH length (for example, symbol length) and the repetition factor.

When applying repetition to a PDSCH, the UE assumes that the repetition of the PDSCH does not cross a slot boundary based on the PDSCH length (for example, symbol length) configured or provided in notification by the base station, and the repetition factor, and determines the period of repetition of each PDSCH. Then, the reception is performed according to the determined period of the repetition of each PDSCH.

The repetition of a PDSCH may include repetitions to which different periods are applied. For example, the repetition of the PDSCH may include the first repetition transmitted in the first period and the second repetition transmitted in the second period that is shorter than the first period.

The base station may control the transmission by applying a given repetition pattern to the PDSCH based on the PDSCH length (for example, the symbol length) and the repetition factor so that the repetition of the PDSCH does not cross a slot boundary.

Further, when different periods are applied to the repetition, the difference in the period of each repetition may be less than or equal to a given symbol (for example, one symbol or less). For example, when a plurality of repetitions includes a repetition to which the first period is applied and a repetition to which the second period is applied, the difference between the first period and the second period is set to be less than or equal to a given symbol. As a result, even when the period of each repetition is configured differently, the difference in the period of each repetition can be reduced, so that the variation in quality and the like between the respective repetitions can be reduced.

Further, the repetition pattern may be configured to be symmetric in a given time domain. The given time domain may be half a slot (half slot) or a sub slot. For example, if a symbol length of a physical shared channel is 2 and the number of repetitions is 8 (L = 2, K = 8), the sub slot pattern applied to the repetition may be a combination of (1,2,2,2), (2,1,2,2), (2,2,1,2), and (2,2,2,1).

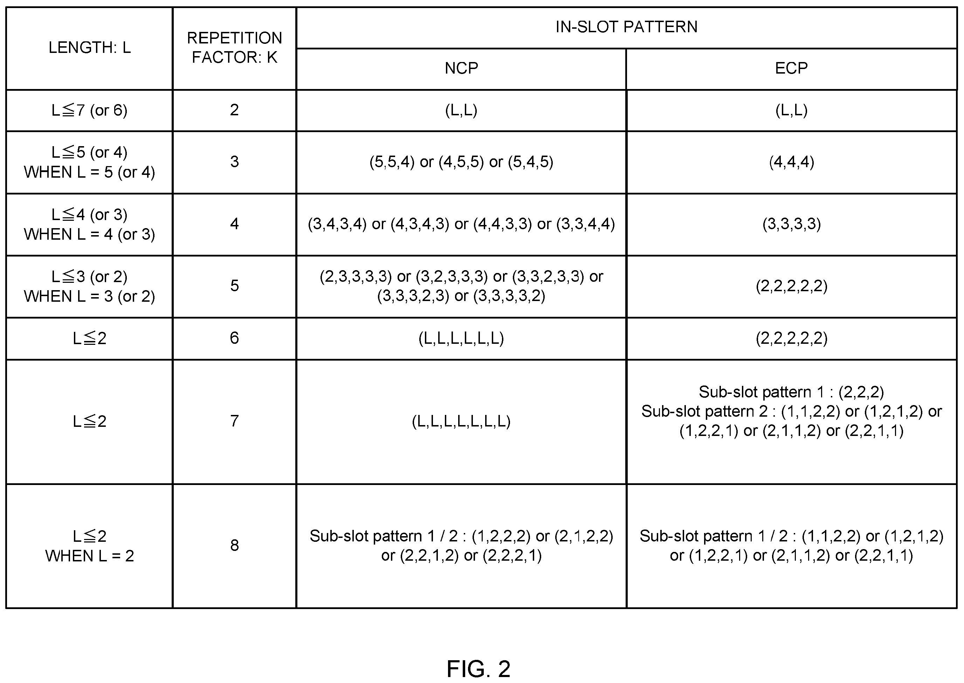

Fig. 2 illustrates an example of a table in which a repetition pattern in one slot is defined corresponding to a symbol length (L) of a physical shared channel to which repetition is applied and a repetition factor. Here, a repetition pattern is defined for each of a normal cyclic prefix (NCP) in which one slot consists of 14 symbols and an extended CP (ECP) in which one slot consists of 12 symbols. The table illustrated in Fig. 2 is an example, and the symbol length, repetition factor, and repetition pattern defined in the table are not limited thereto.

In the table illustrated in Fig. 2, when the symbol length L is 7 (or 6 in the ECP) or less, 2 is supported as the repetition factor K. In this case, the pattern in the slot becomes (L, L) in the NCP and the ECP, and the periods of the two repetitions may be the same.

If the symbol length L is 5 (or 4 in the ECP) or less, 3 may be supported as the repetition factor K. For example, if the symbol length L is 5, when a physical shared channel of five symbols is repeated three times in a slot consisting of 14 symbols, the symbol boundary is crossed.

Therefore, if the symbol length L is 5 in the NCP, (5, 5, 4), (4, 5, 5), or (5, 4, 5) may be applied as a pattern of three times of repetitions. That is, three times of repetitions include a repetition to which the first period (here, five symbols) is applied and a repetition to which the second period (here, four symbols) is applied. On the other hand, if the symbol length L is 4 in the ECP, (4, 4, 4) may be applied as the pattern of three times of repetitions.

If the symbol length L is 4 (or 3 in the ECP) or less, 4 may be supported as the repetition factor K. For example, if the symbol length L is 4, when a physical shared channel of four symbols is repeated four times in a slot consisting of 14 symbols, the symbol boundary is crossed.

Therefore, if the symbol length L is 4 in the NCP, (3, 4, 3, 4), (4, 3, 4, 3), (4, 4, 3, 3), or (3, 3, 4, 4) may be applied as the pattern of four times of repetitions. That is, four times of repetitions include a repetition to which the first period (here, four symbols) is applied and a repetition to which the second period (here, three symbols) is applied. On the other hand, if the symbol length L is 3 in ECP, (3, 3, 3, 3) may be applied as the pattern of four times of repetitions.

If the symbol length L is 3 (or 2 in the ECP) or less, 5 may be supported as the repetition factor K. For example, if the symbol length L is 3, when a physical shared channel of three symbols is repeated five times in a slot consisting of 14 symbols, the symbol boundary is crossed.

Therefore, if the symbol length L is 3 in the NCP, (2, 3, 3, 3, 3), (3, 2, 3, 3, 3), (3, 3, 2, 3, 3), (3, 3, 3, 2, 3), or (3, 3, 3, 3, 2) may be applied as the pattern of five times of repetitions. That is, five times of repetitions include a repetition to which the first period (here, three symbols) is applied and a repetition to which the second period (here, two symbols) is applied. On the other hand, if the symbol length L is 2 in the ECP, (2, 2, 2, 2, 2) may be applied as the pattern of five times of repetitions.

If the symbol length L is 2 or less, 6 or 7 may be supported as the repetition factor K. If the repetition factor is 6, the pattern in a slot to which NCP or ECP is applied is (L, L, L, L, L, L), and the periods of the six repetitions may be the same.

If the repetition factor is 7, the pattern in the slot to which the NCP is applied is (L, L, L, L, L, L, L), and the periods of the seven repetitions may be the same. In this case, the sub slot in which the repetition is arranged corresponds to a half slot. On the other hand, the pattern in the slot to which the ECP is applied may be a pattern in which a first sub slot pattern and a second sub slot pattern are combined. The first sub slot pattern may be, for example, (2, 2, 2). The second sub slot pattern may be, for example, any of (1, 1, 2, 2), (1, 2, 1, 2), (1, 2, 2, 1), (2, 1, 1, 2), and (2, 2, 1, 1).

If the symbol length L is 2 or less, 8 may be supported as the repetition factor K. For example, if the symbol length L is 2, when a physical shared channel of two symbols is repeated eight times in a slot consisting of 14 symbols, the symbol boundary is crossed. Therefore, the repetition pattern is

Therefore, the pattern may be a combination of the first sub slot pattern and the second sub slot pattern. When the NCP is applied, the first sub slot pattern and the second sub slot pattern may be each selected from any of, for example, (1, 2, 2, 2), (2, 1, 2, 2), (2, 2, 1, 2), and (2, 2, 2, 1). When the NCP is applied, the first sub slot pattern and the second sub slot pattern may be each selected from any of, for example, (1, 1, 2, 2), (1, 2, 1, 2), (1, 2, 2, 1), (2, 1, 1, 2), and (2, 2, 1, 1).

In this way, the repetition can be appropriately performed in one slot by controlling the period of each repetition based on the length (L) of the data to be repeatedly transmitted and the repetition factor (K) so that the repetition does not cross the slot boundary. In particular, by configuring the period of each repetition to be different, it is possible to flexibly arrange repetitions in one slot. As a result, deterioration of communication throughput or communication quality can be suppressed.

### (Second Aspect)

A second aspect describes a configuration of a demodulation reference signal when repetition includes transmission to which different periods (for example, TTI length) are applied. The following configuration can be applied to both a DMRS for UL transmission and a DMRS for DL transmission.

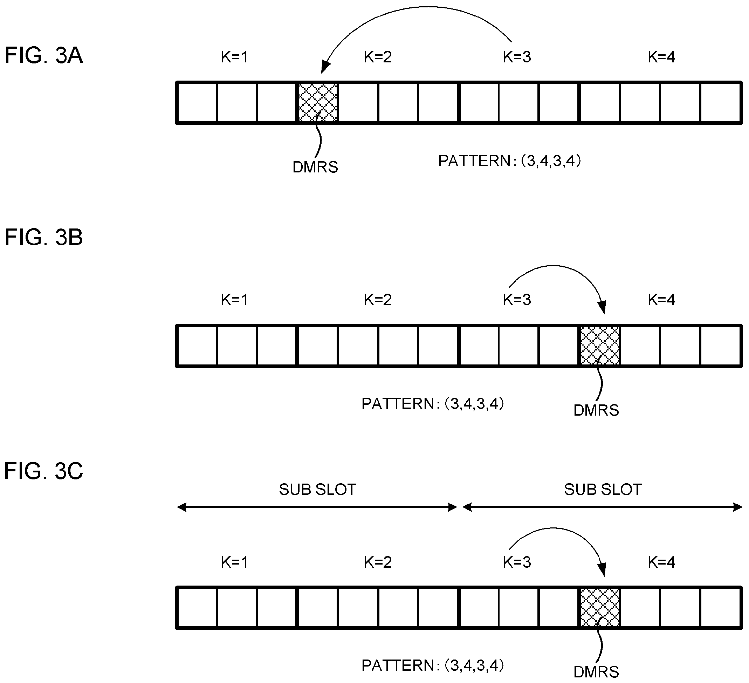

Fig. 3 illustrates repetition when the symbol length L is 4 or less (for example, 4) and the repetition factor K is 4 (or a repetition pattern (3, 4, 3, 4)). The symbol length L, the repetition factor K, and the repetition pattern to which this embodiment is applicable are not limited to this.

In Fig. 3, in four times of repetitions (K = 1 to 4), the repetition period is three symbols at K = 1 and K = 3, and the repetition period is four symbols at K = 2 and K = 4. That is, four times of repetitions include the first repetition (K = 2, 4) transmitted in the first period (for example, four symbols), and the second repetition (K = 1, 3) transmitted in the second period (for example, three symbols), which is shorter than the first period.

For the second repetition whose transmission period (or TTI length) is shorter than that of the first repetition, a demodulation reference signal (for example, DMRS) configured in the period of another repetition (for example, the first repetition) may be used. In this case, the DMRS may be allocated to the first period having a relatively long transmission period and not to the second period having a relatively short relative period. This eliminates the need to arrange the DMRS in the second period, which has a shorter transmission period, so that the second period can be used for allocation of a PDSCH or a PUSCH.

A case is assumed where the n - 1-th (for example, K = 2 in Fig. 3) and the n + 1-th (for example, K = 4 in Fig. 3) repetitions, which are transmitted before and after the n-th (n > 1) repetition (for example, K = 3 in Fig. 3) transmitted using the second period, are transmitted in the first period, which is longer than the second period. In this case, one of the following options 1 to 3 may be applied as the DMRS used for receiving the physical shared channel transmitted in the n-th repetition.

### <Option 1>

For the physical shared channel that is transmitted by the n-th repetition, the DMRS allocated to the n - 1-th repetition period may be applied to perform reception processing (see Fig. 3A). In this case, the same DMRS (or common DMRS) is applied to receive the physical shared channel transmitted by the n - 1-th repetition and receive the physical shared channel transmitted by the n-th repetition.

For example, the UE uses (reuses) the DMRS used to receive the PDSCH transmitted by the second (K = 2) repetition to perform processing for receiving the PDSCH transmitted by the third (K = 3) repetition from the base station. Alternatively, the base station uses (reuses) the DMRS used to receive the PUSCH transmitted by the second (K = 2) repetition to perform processing for receiving the PUSCH transmitted by the third (K = 3) repetition from the UE.

As a result, the reception of the physical shared channel can be controlled by using the DMRS received earlier, so that a delay can be reduced.

### <Option 2>

For the physical shared channel transmitted by the n-th repetition, the DMRS allocated to the n + 1-th repetition period may be applied to perform reception processing (see Fig. 3B). In this case, the same DMRS (or common DMRS) is applied to receive the physical shared channel transmitted by the n + 1-th repetition and receive the physical shared channel transmitted by the n-th repetition.

For example, the UE uses (reuses) the DMRS used to receive the PDSCH transmitted by the fourth (K = 4) repetition to perform processing for receiving the PDSCH transmitted by the third (K = 3) repetition from the base station. Alternatively, the base station uses (reuses) DMRS used to receive the PUSCH transmitted by the fourth (K = 4) repetition to perform processing for receiving the PUSCH transmitted by the third (K = 3) repetition from the UE.

As a result, when the DMRS is arranged at the first symbol of a transmission period, the reception of the physical shared channel can be controlled by using an adjacent DMRS in a time domain, so that the reception accuracy using the DMRS can be improved.

### <Option 3>

For the physical shared channel transmitted by the n-th repetition, the DMRS allocated to a repetition period belonging to the same sub slot may be applied to perform reception processing (see Fig. 3C). Here, a case is illustrated where the n-th (K = 3) and n + 1-th (K = 4) repetitions belong to the same sub slot. In this case, the same DMRS (or common DMRS) is applied to receive the physical shared channel transmitted by the n + 1-th repetition and receive the physical shared channel transmitted by the n-th repetition.

In general, channel qualities within the same sub slot are likely to be similar. Therefore, the reception accuracy using the DMRS can be improved by performing reception processing using a DMRS included in another repetition period belonging to the same sub slot.

### <Conditions when applying a common DMRS>

A DMRS used for another repetition (for example, the first repetition) or a DMRS allocated to another repetition period may be applied to the second repetition only when at least one of the following conditions (1) to (4) is satisfied.

### (1) When the maximum gap between the second repetition that reuses DMRS reception and the first repetition from which the DMRS reception is reused is less than or equal to a given value (for example, x)

For example, the UE receives the second repetition by using the DMRS for the first repetition, when the distance between the DMRS symbol allocated to the first repetition period and the symbol of the second repetition closest to the DMRS is less than or equal to x symbol. The value x may be, for example, a sub slot (seven symbols in the NCP or six symbols in the ECP).

As a result, the DMRS used for the second repetition can be set to a DMRS within a given time domain of the second repetition, so that deterioration of the reception accuracy can be suppressed.

### (2) When frequency hopping (FH) is not applied between the first repetition and the second repetition

For example, if FH is applied between the first repetition and the second repetition, the UE does not have to apply the DMRS for the first repetition in reception processing of the second repetition. On the other hand, if FH is not applied between the first repetition and the second repetition, the DMRS for the first repetition may be applied in the reception processing of the second repetition.

As a result, the DMRS used for the second repetition can be a DMRS in a given frequency domain (for example, the same frequency domain) of the second repetition, so that deterioration of the reception accuracy can be suppressed.

### (3) When the same transmission power or the same transmission power density (power spectrum density (PSD)) is applied between the first repetition and the second repetition

For example, if different transmission powers or transmission power densities are applied between the first repetition and the second repetition, the UE does not have to apply the DMRS for the first repetition in the reception processing of the second repetition. On the other hand, if the same transmission power or transmission power density is applied between the first repetition and the second repetition, the UE may apply the DMRS for the first repetition in the reception processing of the second repetition.

As a result, the reception processing can be performed based on the DMRS to which the same transmission power as that of the second repetition is applied, so that deterioration of the reception accuracy can be suppressed.

### (4) When the same number of resource blocks (for example, physical resource blocks (PRBs)) is applied between the first repetition and the second repetition

For example, if a different number of resource blocks is applied between the first repetition and the second repetition, the UE does not have to apply the DMRS for the first repetition in the reception processing of the second repetition. On the other hand, if the same number of resource blocks is applied between the first repetition and the second repetition, the UE may apply the DMRS for the first repetition in the reception processing of the second repetition.

As a result, the conditions for the first repetition and the conditions for the second repetition can be matched, so that the reception processing based on a DMRS can be appropriately performed.

### (Third Aspect)

In the third aspect, a method of notifying the UE of information on the number of repetitions, information on repetition patterns in a slot, and information on allocation resources in a time domain will be described.

The network (for example, a base station) may use higher layer signaling to notify the UE of information about the maximum number of repetitions and information about repetition patterns (for example, a plurality of pattern candidates) in a slot. The base station may also use downlink control information (DCI) to notify the UE of the repetition factor and allocation resources in a time domain.

The UE may perform one of operations of the following options 1 to 3 (for example, reception of a PDSCH that is repeatedly transmitted or repetition of a PUSCH) based on the higher layer signaling and DCI received from the base station.

### <Option 1>

A time domain resource allocation field (time-domain RA field) included in DCI may specify a start and length indicator value (SLIV) including the length L (for example, symbol length) of a physical shared channel. The SLIV corresponds to instruction information of a start symbol (S) and a data length (L) of a physical shared channel (for example, PUSCH or PDSCH).

In this case, the repetition factor K may be configured by higher layer signaling, in a background example, or specified by DCI scheduling the physical shared channel. When the repetition factor K is specified to the UE by using DCI, the UE is notified of a candidate set of the repetition factor K in advance by higher layer signaling, and a specific candidate may be specified by using the DCI.

### <Option 2>

The time domain resource allocation field included in the DCI specifies an SLIV including the length L of a physical shared channel and the repetition factor K. In this case, a given repetition factor K and the SLIV may be associated and provided in notification (joint indication). For example, when the UE receives a given SLIV, a repetition factor K associated with the given SLIV is selected.

### <Option 3>

The time domain resource allocation field included in the DCI may specify an SLIV including the length L of a physical shared channel, and given bits in a frequency domain RA field included in the DCI may specify the repetition factor K. The most significant x bits (x MSB bits) may be used as given bits in the frequency domain resource allocation field. In this case, the same mechanism as frequency hopping offset specification (provided in notification by MSB in a given field) may be used.

The period of each repetition may be determined with reference to the table in Fig. 2 based on L and K of which the base station notifies.

### (Radio Communication System)

A configuration of a radio communication system according to one embodiment of the present disclosure is hereinafter described. In this radio communication system, communication is performed using one or a combination of the radio communication methods according to the embodiments of the present disclosure.

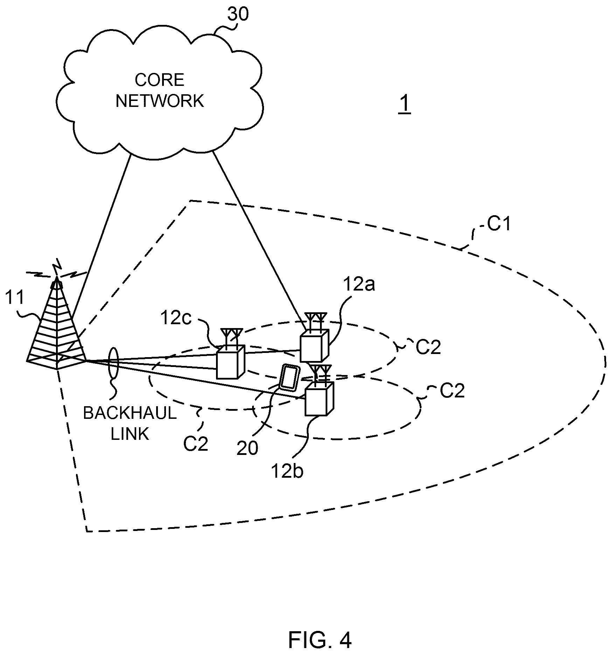

Fig. 4 is a diagram illustrating an example of a schematic configuration of a radio communication system according to one embodiment. A radio communication system 1 may be a system that implements communication using long term evolution (LTE), 5th generation mobile communication system new radio (5G NR), and the like specified by 3rd generation partnership project (3GPP).

Furthermore, the radio communication system 1 may support dual connectivity (multi-RAT dual connectivity (MR-DC)) between a plurality of radio access technologies (RATs). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in identical RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be located in at least one cell. The arrangement, number, and the like of cells and the user terminal 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (frequency range 1 (FR1)) and a second frequency band (frequency range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of FR1 and FR2 are not limited to these, and for example, FR1 may be a frequency band higher than FR2.

The user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

A base station 10 may be connected to a core network 30 via another base station 10 or directly. The core network 30 may include, for example, at least one of evolved packet core (EPC), 5G core network (5GCN), next generation core (NGC), and the like.

The user terminal 20 may correspond to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by the user terminal 20, a physical broadcast channel (PBCH), a physical downlink control channel (PDCCH), or the like may be used.

In the radio communication system 1, as an uplink channel, a physical uplink shared channel (PUSCH) shared by the user terminal 20, a physical uplink control channel (PUCCH), a physical random access channel (PRACH), or the like may be used.

User data, higher layer control information, a system information block (SIB), and the like are transmitted on the PDSCH. PUSCH may transmit user data, higher layer control information, and the like. PBCH may transmit master information block (MIB).

PDCCH may transmit lower layer control information. The lower layer control information may include, for example, downlink control information (DCI) including scheduling information of at least one of PDSCH and PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

A control resource set (CORESET) and a search space may be used to detect PDCCH. CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One SS may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

By means of PUCCH channel state information (CSI), delivery confirmation information (for example, hybrid automatic repeat request (HARQ-ACK), which may be referred to as ACK/NACK or the like), scheduling request (SR), and the like may be transmitted. By means of PRACH, a random access preamble for establishing a connection with a cell may be transmitted.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SSB (SS Block), and the like. Note that SS, SSB, or the like may also be referred to as a reference signal.

In the radio communication system 1, a sounding reference signal (SRS), a demodulation reference signal (DMRS), and the like may be transmitted as an uplink reference signal (UL-RS). Note that, DMRSs may be referred to as "user terminal-specific reference signals (UE-specific Reference Signals)".

### (Base Station)

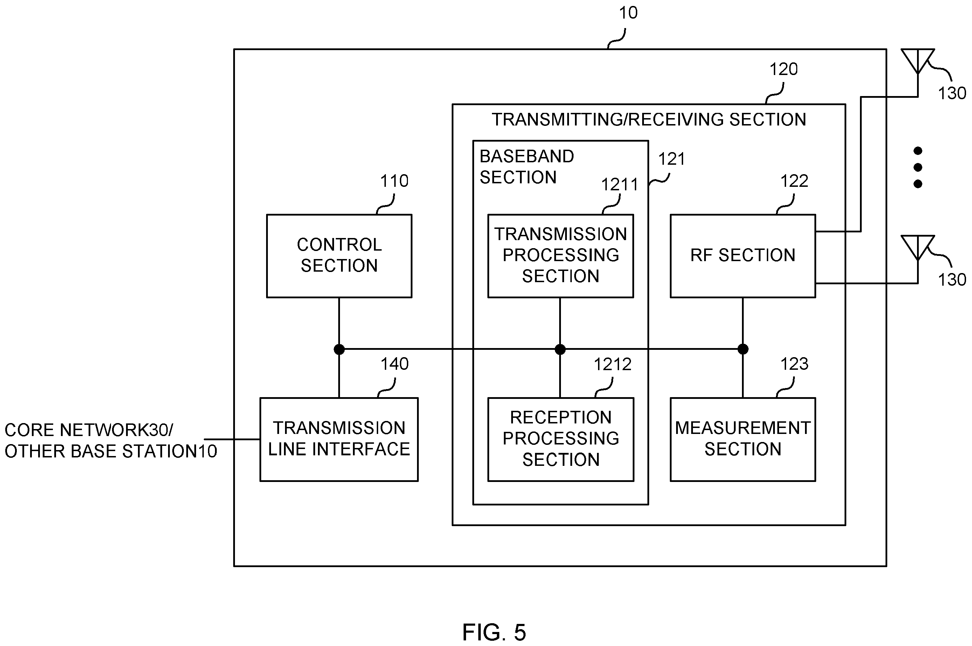

Fig. 5 is a diagram illustrating an example of a configuration of a base station according to one embodiment. The base station 10 includes a control section 110, a transmission/reception section 120, a transmission/reception antenna 130, and a transmission line interface 140. Note that one or more of the control sections 110, one or more of the transmission/reception sections 120, one or more of the transmission/reception antennas 130, and one or more of the transmission line interfaces 140 may be included.

Note that, although this example will primarily illustrate functional blocks that pertain to characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmission/reception section 120, the transmission/reception antenna 130, and the transmission line interface 140. The control section 110 may generate data to be transmitted as a signal, control information, a sequence, and the like, and may transfer the data, the control information, the sequence, and the like to the transmission/reception section 120. The control section 110 may perform call processing (such as configuration or releasing) of a communication channel, management of the state of the base station 10, and management of a radio resource.

The transmission/reception section 120 may include a baseband section 121, a radio frequency (RF) section 122, and a measurement section 123. The baseband section 121 may include a transmission processing section 1211 and a reception processing section 1212. The transmission/reception section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmission/reception section 120 may be constituted as an integrated transmission/reception section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmission/reception section 120 may transmit the above-described downlink channel, synchronization signal, downlink reference signal, and the like. The transmission/reception section 120 may receive the above-described uplink channel, uplink reference signal, and the like.

The transmission/reception section 120 may form at least one of a Tx beam and a reception beam by using digital beam forming (for example, precoding), analog beam forming (for example, phase rotation), and the like.

The transmission/reception section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data acquired from the control section 110 or control information to generate a bit string to be transmitted.

The transmission/reception section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmission/reception section 120 (RF section 122) may perform modulation to a radio frequency band, filtering processing, amplification, and the like on the baseband signal, and may transmit a signal in the radio frequency band via the transmission/reception antenna 130.

Meanwhile, the transmission/reception section 120 (RF section 122) may perform amplification, filtering processing, demodulation to a baseband signal, and the like on the signal in the radio frequency band received by the transmission/reception antenna 130.

The transmission/reception section 120 (reception processing section 1212) may apply reception processing such as analog-digital transform, inverse fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmission/reception section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), signal to interference plus noise ratio (SINR), or signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmission/reception section 120, the transmission/reception antenna 130, and the transmission line interface 140.

Note that the transmission/reception section 120 receives a physical shared channel (for example, PUSCH) for which repetition is configured (or applied). Further, the transmission/reception section 120 transmits a physical shared channel (for example, PDSCH) for which repetition is configured (or applied).

The control section 110 may receive data that is repeatedly transmitted from the UE on the assumption that the period of each repetition is determined based on at least one of the length of the physical shared channel and the repetition factor, so that each repetition does not cross the slot boundary.

### (User Terminal)

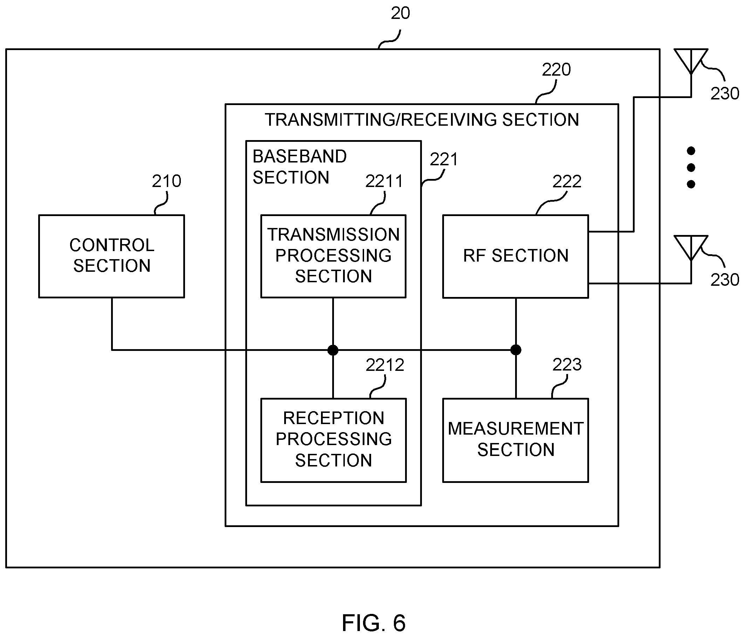

Fig. 6 is a diagram illustrating an example of a configuration of a user terminal according to one embodiment. The user terminal 20 includes a control section 210, a transmission/reception section 220, and a transmission/reception antenna 230. Note that one or more of the control sections 210, one or more of the transmission/reception sections 220, and one or more of the transmission/reception antennas 230 may be included.

Note that, although this example mainly describes a functional block which is a characteristic part of the present embodiment, it may be assumed that the user terminal 20 also has another functional block necessary for radio communication. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmission/reception section 220 and the transmission/reception antenna 230. The control section 210 may generate data to be transmitted as a signal, control information, a sequence, and the like, and may transfer the data, the control information, the sequence, and the like to the transmission/reception section 220.

The transmission/reception section 220 may include a baseband section 221, an RF section 222, and a measurement section 223. The baseband section 221 may include a transmission processing section 2211 and a reception processing section 2212. The transmission/reception section 220 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmission/reception section 220 may be constituted as an integrated transmission/reception section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmission/reception antenna 230 can be constituted by an antenna described based on common recognition in the technical field to which the present disclosure relates, for example, an array antenna.

The transmission/reception section 220 may receive the above-described downlink channel, synchronization signal, downlink reference signal, and the like. The transmission/reception section 220 may transmit the above-described uplink channel, uplink reference signal, and the like.

The transmission/reception section 220 may form at least one of a Tx beam and a reception beam by using digital beam forming (for example, precoding), analog beam forming (for example, phase rotation), and the like.

The transmission/reception section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmission/reception section 220 (transmission processing section 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmission/reception section 220 (transmission processing section 2211) may perform DFT processing as the transmission processing in order to transmit the channel using a DFT-s-OFDM waveform. When transform precoding is not enabled for a channel (for example, PUSCH), the transmission/reception section 220 (transmission processing section 2211) does not have to perform DFT processing as the transmission processing.

The transmission/reception section 220 (RF section 222) may perform modulation to a radio frequency band, filtering processing, amplification, and the like on the baseband signal, and may transmit a signal in the radio frequency band via the transmission/reception antenna 230.

Meanwhile, the transmission/reception section 220 (RF section 222) may perform amplification, filtering processing, demodulation to a baseband signal, and the like on the signal in the radio frequency band received by the transmission/reception antenna 230.

The transmission/reception section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal.

The transmission/reception section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may be constituted by at least one of the transmission/reception section 220, the transmission/reception antenna 230, and the transmission line interface 240.

Note that the transmission/reception section 220 transmits a physical shared channel (for example, PUSCH) for which repetition is configured (or applied). Further, the transmission/reception section 220 transmits a physical shared channel (for example, PDSCH) for which repetition is configured.

The control section 210 determines the period of each repetition based on at least one of the length of the physical shared channel and the repetition factor, so that each repetition does not cross the slot boundary. The difference in the period of each repetition may be less than or equal to a given symbol (for example, one symbol).

Further, the control section 210 may determine the period of each repetition so that the repetition pattern is symmetric in a given time domain unit.

Further, the control section 210 may determine the period of each repetition based on at least one of the symbol length of the physical shared channel and the repetition factor, so that each repetition does not cross the slot boundary.

Further, when the repetition includes the first repetition transmitted in the first period and the second repetition transmitted in the second period that is shorter than the first period, the control section 210 may perform control to receive the first repetition and the second repetition based on the same demodulation reference signal.

### (Hardware Configuration)

Note that the block diagrams that have been used to describe the above embodiments illustrate blocks in functional units. These functional blocks (configuration units) may be implemented in arbitrary combinations of at least one of hardware or software. Also, the method for implementing each functional block is not particularly limited. That is, each functional block may be achieved by a single device physically or logically aggregated, or may be achieved by directly or indirectly connecting two or more physically or logically separate devices (using wires, radio, or the like, for example) and using these plural devices. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (configuration unit) that causes transmission to function may be called a transmitting unit, a transmitter, and the like. In any case, as described above, the implementation method is not particularly limited.

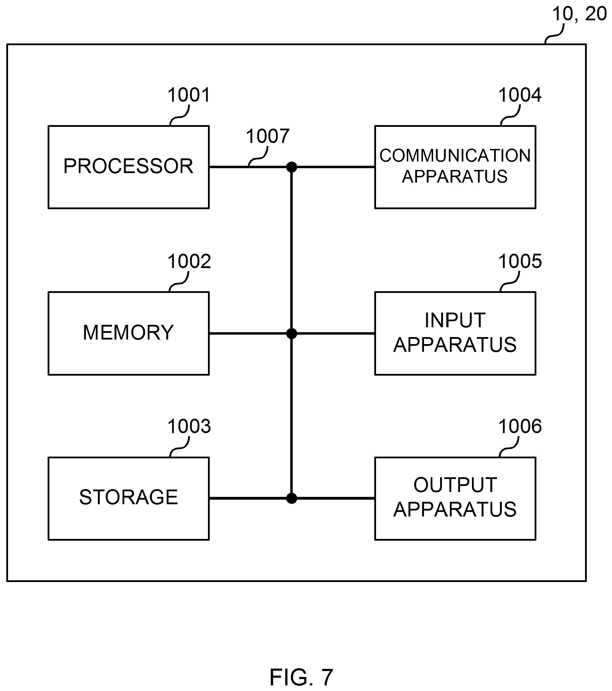

For example, the base station, the user terminal, and so on according to one embodiment of the present disclosure may function as a computer that executes the processing of the radio communication method of the present disclosure. Fig. 7 is a diagram illustrating an exemplary hardware configuration of a base station and a user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the terms such as an apparatus, a circuit, an apparatus, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Furthermore, processing may be implemented with one processor, or processing may be implemented in parallel, in sequence, or in different manners, on two or more processors. Note that the processor 1001 may be implemented with one or more chips.

Each function of the base station 10 and the user terminal 20 is implemented by, for example, reading given software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be constituted by a central processing unit (CPU) including an interface with peripheral equipment, a control apparatus, an operation apparatus, a register, and the like. For example, at least a part of the above-described control section 110 (210), transmission/reception section 120 (220), and the like may be implemented by the processor 1001.

Furthermore, the processor 1001 reads programs (program codes), software modules, data, and so on from at least one of the storage 1003 or the communication apparatus 1004 into the memory 1002, and executes various processing according to these. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may be constituted by, for example, at least one of read only memory (ROM), erasable programmable ROM (EPROM), electrically EPROM (EEPROM), random access memory (RAM) and/or other appropriate storage media. The memory 1002 may be referred to as a "register", a "cache", a "main memory (primary storage apparatus)", and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus".

The communication apparatus 1004 is hardware (transmitting/receiving apparatus) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmission/reception section 120 (220), the transmission/reception antenna 130 (230), and the like described above may be implemented by the communication apparatus 1004. The transmission/reception section 120 (220) may be implemented by physically or logically separating the transmission section 120a (220a) and the reception section 120b (220b) from each other.

The input apparatus 1005 is an input device for receiving input from the outside (for example, a keyboard, a mouse, a microphone, a switch, a button, a sensor, and so on). The output apparatus 1006 is an output device for allowing sending output to the outside (for example, a display, a speaker, a light emitting diode (LED) lamp, and so on). Note that the input apparatus 1005 and the output apparatus 1006 may be provided in an integrated structure (for example, a touch panel).

Furthermore, these pieces of apparatus, including the processor 1001, the memory 1002, and so on are connected by the bus 1007 so as to communicate information. The bus 1007 may be formed with a single bus, or may be formed with buses that vary between pieces of apparatus.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), and so on, and part or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with other terms that have the same or similar meanings. For example, a channel, a symbol, and a signal (or signaling) may be replaced with each other. The signal may be a message. A reference signal can be abbreviated as an "RS", and may be referred to as a "pilot", a "pilot signal", and so on, depending on which standard applies. Furthermore, a "component carrier (CC)" may be referred to as a "cell", a "frequency carrier", a "carrier frequency", and so on.

A radio frame may be composed of one or more periods (frames) in the time domain. Each of one or more periods (frames) constituting a radio frame may be referred to as a "subframe". Furthermore, a subframe may be formed with one or multiple slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and so on.

A slot may be formed with one or more symbols in the time domain (orthogonal frequency division multiplexing (OFDM) symbols, single carrier frequency division multiple access (SC-FDMA) symbols, or the like). Also, a slot may be a time unit based on numerology.

A slot may include a plurality of mini slots. Each mini slot may be formed with one or more symbols in the time domain. Also, a mini slot may be referred to as a "sub slot". Each mini slot may be formed with fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

A radio frame, a subframe, a slot, a mini slot, and a symbol all represent the time unit in signal communication. A radio frame, a subframe, a slot, a mini slot, and a symbol may be called by other respective applicable names. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", and so on, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords, and so on, or may be the unit of processing in scheduling, link adaptation, and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

A TTI having a period of 1 ms may be referred to as usual TTI (TTI in 3GPP Rel. 8 to 12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "mini slot", "sub slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is a resource allocation unit of the time domain and frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one mini slot, one subframe, or one TTI in length. One TTI, one subframe, and the like may be each formed with one or more resource blocks.

Note that one or more RBs may be referred to as a "physical resource block (PRB (Physical RB))", a "subcarrier group (SCG)", a "resource element group (REG)", a "PRB pair", an "RB pair", and so on.

Furthermore, a resource block may be comprised of one or more resource elements (REs). For example, one RE may be a radio resource field of one subcarrier and one symbol.

The bandwidth part (BWP) (which may be called partial bandwidth and the like) may represent a subset of consecutive common RB (common resource blocks) for a certain numerology in a certain carrier. Here, the common RB may be specified by the index of the RB based on a common reference point of the carrier. PRB may be defined in a certain BWP and may be numbered within the BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that "cell", "carrier", and the like in the present disclosure may be replaced with "BWP".

Note that the structures of radio frames, subframes, slots, mini slots, symbols, and so on described above are merely examples. For example, configurations pertaining to the number of subframes included in a radio frame, the number of slots included in a subframe or a radio frame, the number of mini-slots included in a slot, the number of symbols and RBs included in a slot or a mini slot, the number of subcarriers included in an RB, the number of symbols in a TTI, the symbol length, the length of cyclic prefixes (CPs), and so on can be variously changed.

Furthermore, the information and parameters described in the present disclosure may be represented in absolute values, represented in relative values with respect to given values, or represented using other corresponding information. For example, an instruction on the radio resource may be given by a given index.

The names used for parameters and so on in the present disclosure are in no respect limiting. In addition, an equation and so on using these parameters may differ from those explicitly disclosed in the present disclosure. Since various channels (physical uplink control channel (PUCCH), physical downlink control channel (PDCCH), and the like) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals, and so on may be input and output via a plurality of network nodes.

The information, signals, and so on that are input and/or output may be stored in a specific location (for example, in a memory), or may be managed in a control table. The information, signals, and so on to be input and/or output can be overwritten, updated, or appended. The information, signals, and so on that are output may be deleted. The information, signals, and so on that are input may be transmitted to other pieces of apparatus.

Notification of information is by no means limited to the aspects/embodiments described in the present disclosure, and other methods may be used as well. For example, notification of information in the present disclosure may be performed by using physical layer signaling (for example, downlink control information (DCI), uplink control information (UCI), higher layer signaling (for example, radio resource control (RRC) signaling, broadcast information (master information block (MIB), system information block (SIB), or the like), medium access control (MAC) signaling, another signal, or a combination thereof.

Note that physical layer signaling may be referred to as "L1/L2 (Layer 1/Layer 2) control information (L1/L2 control signals)", "L1 control information (L1 control signal)", and so on. Furthermore, the RRC signaling may be called an RRC message, and may be, for example, an RRC connection setup message, an RRC connection reconfiguration message, and the like. Also, the MAC signaling may be reported using, for example, MAC control elements (MAC CEs).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison with a given value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be compatibly used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When the base station accommodates a plurality of cells, the entire coverage area of the base station can be partitioned into a plurality of smaller areas, and each smaller area can provide the communication service through the base station subsystem (for example, indoor small base station (remote radio head (RRH)). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as a transmitting apparatus, a receiving apparatus, a radio communication apparatus, or the like. Note that at least one of the base station and mobile station may be a device mounted on a moving body, a moving body itself, and the like. The moving body may be a transportation (for example, a car, an airplane and so on), an unmanned moving body (for example, a drone, an autonomous car, and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Furthermore, the base stations in the present disclosure may be replaced with the user terminal. For example, each aspect/embodiment of the present disclosure may be applied to a structure in which communication between the base station and the user terminal is replaced with communication among a plurality of user terminals (which may be referred to as, for example, D2D (Device-to-Device), V2X (Vehicle-to-Everything), and so on). In this case, the user terminal 20 may be configured to have the functions of the base station 10 described above. In addition, the wording such as "up" and "down" may be replaced with the wording corresponding to the terminal-to-terminal communication (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

Certain operations that have been described in the present disclosure to be performed by base stations may, in some cases, be performed by their upper nodes. In a network including one or a plurality of network nodes including the base station, it is clear that various operations performed so as to communicate with terminals may be performed by the base station, one or more network nodes other than the base station (for example, mobility management entity (MME), serving-gateway (S-GW), and the like are considered, but there is no limitation), or a combination of these.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new radio access technology (New-RAT), New Radio(NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate radio communication methods and a next generation system expanded based on these methods, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The term "judging (determining)" used in the present disclosure may encompass a wide variety of operations. For example, "judging (determining)" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and so on.

In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some operations.

In addition, "determining" as used herein may be replaced with "assuming", "expecting", "considering", and the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency domain, microwave, and optical (both visible and invisible) regions, or the like.

In the present disclosure, the phrase "A and B are different" may mean "A and B are different from each other". Note that the term may mean that "A and B are each different from C". Words such as "separate" and "coupled" may be interpreted like "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

The scope of protection of the invention is defined in the appended set of claims.

## Claims

1. A terminal (20) comprising:
a receiving section (220) configured to receive, from a base station (10), information on a number of repetitions applied to a physical uplink shared channel, PUSCH, and a length of the PUSCH; and
a control section (210) configured to control, based on the information, PUSCH repetition transmission to the base station (10),
wherein the PUSCH repetition transmission comprises a plurality of PUSCH transmissions, and the PUSCH repetition transmission supports a configuration of periods of different lengths for the plurality of PUSCH transmissions,
a time domain resource allocation field is included in downlink control information, DCI, received from the base station (10),
the DCI schedules the PUSCH repetition transmission,
the information on the number of repetitions applied to the PUSCH and the length of the PUSCH is indicated by the time domain resource allocation field, and
the number of repetitions of the PUSCH is part of a candidate set of a number of PUSCH repetitions signalled in advance by the base station (10) using higher layer signaling.

2. The terminal (20) according to claim 1, wherein the plurality of PUSCH transmissions to which different periods are applied are supported in a slot in the PUSCH repetition transmission.

3. The terminal (20) according to claim 1 or 2, wherein allocation of the PUSCH repetition transmission in a plurality of slots is supported.

4. A radio communication method for a terminal (20), comprising:
receiving, from a base station (10), information on a number of repetitions applied to a physical uplink shared channel, PUSCH, and a length of the PUSCH; and
controlling, based on the information, PUSCH repetition transmission to the base station (10),
wherein the PUSCH repetition transmission comprises a plurality of PUSCH transmissions, and the PUSCH repetition transmission supports a configuration of periods of different lengths for the plurality of PUSCH transmissions,
a time domain resource allocation field is included in downlink control information, DCI, received from the base station (10),
the DCI schedules the PUSCH repetition transmission,
the information on the number of repetitions applied to the PUSCH and the length of the PUSCH is indicated by the time domain resource allocation field, and
the number of repetitions of the PUSCH is part of a candidate set of a number of PUSCH repetitions signalled in advance by the base station (10) using higher layer signaling.

5. A base station (10) comprising:
a transmitting section (120) configured to transmit, to a terminal (20), information on a number of repetitions applied to a physical uplink shared channel, PUSCH, and a length of the PUSCH; and
a control section (110) configured to control reception of PUSCH repetition transmission transmitted from the terminal (20) based on the information,
wherein the PUSCH repetition transmission comprises a plurality of PUSCH transmissions and the PUSCH repetition transmission supports a configuration of periods of different lengths for the plurality of PUSCH transmissions,
the transmitting section (120) is configured to transmit downlink control information, DCI, for scheduling the PUSCH repetition transmission, the DCI including a time domain resource allocation field,
the information on the number of repetitions applied to the PUSCH and the length of the PUSCH is indicated by the time domain resource allocation field, and the number of repetitions of the PUSCH is part of a candidate set of a number of PUSCH repetitions signalled in advance by the base station to the terminal using higher layer signaling.

6. A system comprising a terminal (20) according to any one of claims 1 through 3, and a base station (10) according to claim 5.

## Patentansprüche

1. Endgerät (20), umfassend:
einen Empfangsabschnitt (220), der so konfiguriert ist, dass er von einer Basisstation (10) Informationen zu einer Anzahl von Wiederholungen, die auf einen physischen Aufwärtsverbindungskanal, PUSCH, angewendet werden, und eine Länge des PUSCH empfängt; und
einen Steuerabschnitt (210), der so konfiguriert ist, dass er basierend auf den Informationen PUSCH-Wiederholungsübertragung an die Basisstation (10) steuert,
wobei die PUSCH-Wiederholungsübertragung eine Vielzahl von PUSCH-Übertragungen umfasst und die PUSCH-Wiederholungsübertragung eine Konfiguration von Perioden unterschiedlicher Längen für die Vielzahl von PUSCH-Übertragungen unterstützt,
wobei ein Zeitbereichsressourcen-Zuweisungsfeld in die Downlink-Steuerinformationen, DCI, die von der Basisstation (10) empfangen werden, eingeschlossen ist,
wobei die DCI die PUSCH-Wiederholungsübertragung planen,
wobei die Informationen zu der Anzahl von Wiederholungen, die auf den PUSCH angewendet werden, und die Länge des PUSCH durch das Zeitbereichsressourcen-Zuweisungsfeld angegeben werden, und
die Anzahl von Wiederholungen des PUSCH Teil eines Kandidatensatzes einer Anzahl von PUSCH-Wiederholungen ist, der vorab durch die Basisstation (10) unter Verwendung von Signalisierung höherer Schichten signalisiert wurde.

2. Endgerät (20) nach Anspruch 1, wobei die Vielzahl von PUSCH-Übertragungen, auf die unterschiedliche Perioden angewendet werden, in einem Slot in der PUSCH-Wiederholungsübertragung unterstützt wird.

3. Endgerät (20) nach Anspruch 1 oder 2, wobei Zuweisung der PUSCH-Wiederholungsübertragung in einer Vielzahl von Slots unterstützt wird.

4. Funkkommunikationsverfahren für ein Endgerät (20), umfassend:
Empfangen von einer Basisstation (10) von Informationen zu einer Anzahl von Wiederholungen, die auf einen physischen Aufwärtsverbindungskanal, PUSCH, angewendet werden, und eine Länge des PUSCH; und
Steuern der PUSCH-Wiederholungsübertragung an die Basisstation (10) basierend auf den Informationen,
wobei die PUSCH-Wiederholungsübertragung eine Vielzahl von PUSCH-Übertragungen umfasst und die PUSCH-Wiederholungsübertragung eine Konfiguration von Perioden unterschiedlicher Längen für die Vielzahl von PUSCH-Übertragungen unterstützt,
wobei ein Zeitbereichsressourcen-Zuordnungsfeld in die Downlink-Steuerinformationen, DCI, die von der Basisstation (10) empfangen werden, eingeschlossen ist,
wobei die DCI die PUSCH-Wiederholungsübertragung planen,
wobei die Informationen zu der Anzahl von Wiederholungen, die auf den PUSCH angewendet werden, und die Länge des PUSCH durch das Zeitbereichsressourcen-Zuordnungsfeld angegeben werden, und
die Anzahl von Wiederholungen des PUSCH Teil eines Kandidatensatzes einer Anzahl von PUSCH-Wiederholungen ist, der vorab durch die Basisstation (10) unter Verwendung von Signalisierung höherer Schichten signalisiert wurde.

5. Basisstation (10), umfassend:
einen Übertragungsabschnitt (120), der so konfiguriert ist, dass er Informationen zu einer Anzahl von Wiederholungen, die auf einen physischen Aufwärtsverbindungskanal, PUSCH, angewendet werden, und eine Länge des PUSCH an Endgerät (20) überträgt; und
einen Steuerabschnitt (110), der so konfiguriert ist, dass er den Empfang der PUSCH-Wiederholungsübertragung, die von dem Endgerät (20) übertragen wird, basierend auf den Informationen steuert,
wobei die PUSCH-Wiederholungsübertragung eine Vielzahl von PUSCH-Übertragungen umfasst und die PUSCH-Wiederholungsübertragung eine Konfiguration von Perioden unterschiedlicher Längen für die Vielzahl von PUSCH-Übertragungen unterstützt,
wobei der Übertragungsabschnitt (120) so konfiguriert ist, dass er Downlink-Steuerinformationen, DCI, zum Planen der PUSCH-Wiederholungsübertragung überträgt, wobei die DCI ein Zeitbereichsressourcen-Zuweisungsfeld einschließen,
wobei die Informationen zu der Anzahl von Wiederholungen, die auf den PUSCH angewendet werden, und die Länge des PUSCH durch das Zeitbereichsressourcen-Zuweisungsfeld angegeben werden, und
die Anzahl von Wiederholungen des PUSCH Teil eines Kandidatensatzes einer Anzahl von PUSCH-Wiederholungen ist, der vorab durch die Basisstation an das Endgerät unter Verwendung von Signalisierung höherer Schichten signalisiert wurde.

6. System, umfassend ein Endgerät (20) nach einem der Ansprüche 1 bis 3, und einen Basisstation (10) nach Anspruch 5.

## Revendications

1. Terminal (20) comprenant :
une section de réception (220) configurée pour recevoir, en provenance d'une station de base (10), des informations concernant un nombre de répétitions appliquées à un canal partagé physique de liaison montante, PUSCH, et une longueur du PUSCH ; et
une section de commande (210) configurée pour commander, sur la base des informations, une transmission de répétition PUSCH à la station de base (10),
dans lequel la transmission de répétition PUSCH comprend une pluralité de transmissions PUSCH, et la transmission de répétition PUSCH prend en charge une configuration de périodes de différentes longueurs pour la pluralité de transmissions PUSCH,
un champ d'attribution de ressources de domaine temporel est inclus dans des informations de commande de liaison descendante, DCI, reçues en provenance de la station de base (10),
les DCI planifient la transmission de répétition PUSCH,
les informations concernant le nombre de répétitions appliquées au PUSCH et la longueur du PUSCH sont indiquées par le champ d'attribution de ressources de domaine temporel, et
le nombre de répétitions du PUSCH fait partie d'un ensemble candidat d'un nombre de répétitions PUSCH signalées à l'avance par la station de base (10) en utilisant une signalisation de couche plus élevée.

2. Terminal (20) selon la revendication 1, dans lequel la pluralité de transmissions PUSCH auxquelles sont appliquées différentes périodes sont prises en charge dans un créneau dans la transmission de répétition PUSCH.

3. Terminal (20) selon la revendication 1 ou revendication 2, dans lequel l'attribution de la transmission de répétition PUSCH dans une pluralité de créneaux est prise en charge.

4. Procédé de communication radio destiné à un terminal (20), comprenant :
la réception, en provenance d'une station de base (10), d'informations concernant un nombre de répétitions appliquées à un canal partagé physique de liaison montante, PUSCH, et une longueur du PUSCH ; et
la commande, sur la base des informations, d'une transmission de répétition PUSCH à la station de base (10),
dans lequel la transmission de répétition PUSCH comprend une pluralité de transmissions PUSCH, et la transmission de répétition PUSCH prend en charge une configuration de périodes de différentes longueurs pour la pluralité de transmissions PUSCH,
un champ d'attribution de ressources de domaine temporel est inclus dans des informations de commande de liaison descendante, DCI, reçues en provenance de la station de base (10),
les DCI planifient la transmission de répétition PUSCH,
les informations concernant le nombre de répétitions appliquées au PUSCH et la longueur du PUSCH sont indiquées par le champ d'attribution de ressources de domaine temporel, et
le nombre de répétitions du PUSCH fait partie d'un ensemble candidat d'un nombre de répétitions PUSCH signalées à l'avance par la station de base (10) en utilisant une signalisation de couche plus élevée.

5. Station de base (10) comprenant :
une section de transmission (120) configurée pour transmettre, à un terminal (20), des informations concernant un nombre de répétitions appliquées à un canal partagé physique de liaison montante, PUSCH, et une longueur du PUSCH ; et
une section de commande (110) configurée pour commander la réception d'une transmission de répétition PUSCH transmise depuis le terminal (20) sur la base des informations,
dans lequel la transmission de répétition PUSCH comprend une pluralité de transmissions PUSCH, et la transmission de répétition PUSCH prend en charge une configuration de périodes de différentes longueurs pour la pluralité de transmissions PUSCH,
la section de transmission (120) est configurée pour transmettre des informations de commande de liaison descendante, DCI, pour planifier la transmission de répétition PUSCH, les DCI incluant un champ d'attribution de ressources de domaine temporel,
les informations concernant le nombre de répétitions appliquées au PUSCH et la longueur du PUSCH sont indiquées par le champ d'attribution de ressources de domaine temporel, et
le nombre de répétitions du PUSCH fait partie d'un ensemble candidat d'un nombre de répétitions PUSCH signalées à l'avance par la station de base au terminal en utilisant une signalisation de couche plus élevée.

6. Système comprenant un terminal (20) selon l'une quelconque des revendications 1 à 3, et une station de base (10) selon la revendication 5.
